# EUROPÄISCHE PATENTSCHRIFT

(11) **EP 2 630 708 B1**
(45) Veröffentlichungstag und Bekanntmachung des Hinweises auf die Patenterteilung: **21.05.2014**
(21) Anmeldenummer: 11810784.6
(22) Anmeldetag: 20.10.2011
(51) Int. Cl.: H02G 3/00

(54) **MONTAGEHILFSSYSTEM**
MOUNTING ASSISTANCE SYSTEM
SYSTÈME D'AIDE AU MONTAGE

(30) Priorität: 04.11.2010 DE 202010014950 U; 22.10.2010 DE 202010014560 U
(43) Veröffentlichungstag der Anmeldung: 28.08.2013
(73) Patentinhaber: Mende, Frank-Ulrich, 94360 Mitterfels (DE)
(72) Erfinder: Mende, Frank-Ulrich, 94360 Mitterfels (DE)
(74) Vertreter: Graf Glück Kritzenberger
(86) Internationale Anmeldenummer: PCT/DE2011/001873
(87) Internationale Veröffentlichungsnummer: WO 2012/052004

(56) Entgegenhaltungen:
- EP-A1- 2 081 268
- DE-B- 1 246 075
- DE-U1- 20 310 349
- US-A1- 2008 134 477

## Beschreibung

Die Erfindung bezieht sich auf ein Montagehilfssystem zur Montage von Kabelkanälen und Hutschienen auf Montageplatten elektrischer Installationen gemäß Oberbegriff Patentanspruch 1.

Im Bereich der elektrischen Installations- und/oder Steuerungstechnik ist es bekannt(EP 2 081 268 A1), Kabelkanäle zum Verlegen von elektrischen Kabeln an Decken und/oder Wänden zu verwenden. Diese Kabelkanäle sind mehrteilig jeweils aus Stahlblech hergestellt, und zwar mit einem Befestigungsprofil zum Befestigen an der betreffenden Gebäudewand oder Decke sowie mit einem schalenförmigen Abdeckprofil, welches bei geschlossenem Kabelkanal beispielsweise verrastend mit dem Halteprofil verbunden ist.

Im Bereich der elektrischen Installations- und/oder Steuerungstechnik ist es ferner vielfach, beispielsweise bei der Herstellung von elektrischen Versorgungs- und/oder Schalt- und/oder Steuerungsanlagen oder -schränken usw. erforderlich, Hutschienen zum Befestigen von elektrischen Funktionselementen und Kabelkanäle zur Aufnahme und Führung von elektrischen Leitungen oder Kabeln an einer Basis- oder Montagefläche oder -platte, die beispielsweise die Rückwand eines Schaltschranks ist, ausgerichtet und insbesondere auch parallel zu einander und/oder in einem vorgegebenen Abstand zu montieren.

Hutschienen sind dabei im Sinne der Erfindung insbesondere solche mit dem für das Montieren von elektrischen Komponenten geeigneten und dem Fachmann bekannten Profil, d.h. insbesondere solche mit eine U-förmigen Querschnitt mit an der offenen Profilseite seitlich wegstehenden Profilabschnitten, d.h. beispielsweise mit dem üblicherweise verwendeten Profil TS35. Hutschienen sind im Sinne der Erfindung sind aber auch andere Schienen, z.B. C-Schienen, die zur Befestigung von Bauteilen oder Komponenten in elektrischen Versorgungs- und/oder Schalt- und/oder Steuerungsanlagen oder -schränken usw. verwendet werden und/oder hierfür geeignet sind, und zwar auch unabhängig von Profilhöhe und/oder -breite.

Kabelkanäle sind im Sinne der Erfindung aber insbesondere solche, die üblicherweise u.a. bei elektrischen Versorgungs- und/oder Schalt- und/oder Steuerungsanlagen oder -schränken usw. verwendet werden und dem Fachmann hierfür bekannt sind. Derartige Kabelkanäle sind im Wesentlichen als U-Profil mit geschlitzten Schenkeln ausgebildet, und zwar zum Durchführen der elektrischen Leitungen oder Kabel durch die Schenkel in das Innere des jeweiligen Kabelkanals, der mit seinem die Schenkel verbindenden Jochabschnitt Basis- oder Montagefläche oder -platte befestigt ist.

Aufgabe der Erfindung ist es, ein Montagehilfssystem aufzuzeigen, mit dem eine ausgerichtete und exakte Montage von Kabelkanälen und Hutschienen an einer Basis- oder Montageplatte in vereinfachter Weise möglich ist. Zur Lösung dieser Aufgabe ist ein Montagehilfssystem entsprechend dem Patentanspruch 1 ausgebildet.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in perspektivischer Darstellung eine der Abstandslehren des erfindungsgemäßen Montagehilfssystems;
- Fig. 2: in vereinfachter Teildarstellung einen Schnitt durch eine Montageplatte einer elektrischen Versorgungs- und/oder Schalt- und/oder Steuerungsanlage, zusammen mit zwei auf der Oberseite der Basisplatte angeordneten und voneinander durch eine Abstandslehre beabstandeten Kabelkanälen und einem Seitenanschlagelement für einen der Kabelkanäle;
- Fig. 3: in vereinfachter Darstellung eine Draufsicht auf die Anordnung der Figur 2;
- Fig. 4: eines der Anschlagelemente des Montagehilfssystems in perspektivischer Darstellung;
- Fig. 5: in schematischer Darstellung eine Draufsicht auf eine plattenförmigen Ablage zum Aufbewahren einer Vielzahl von Abstandslehren unterschiedlicher Größe.

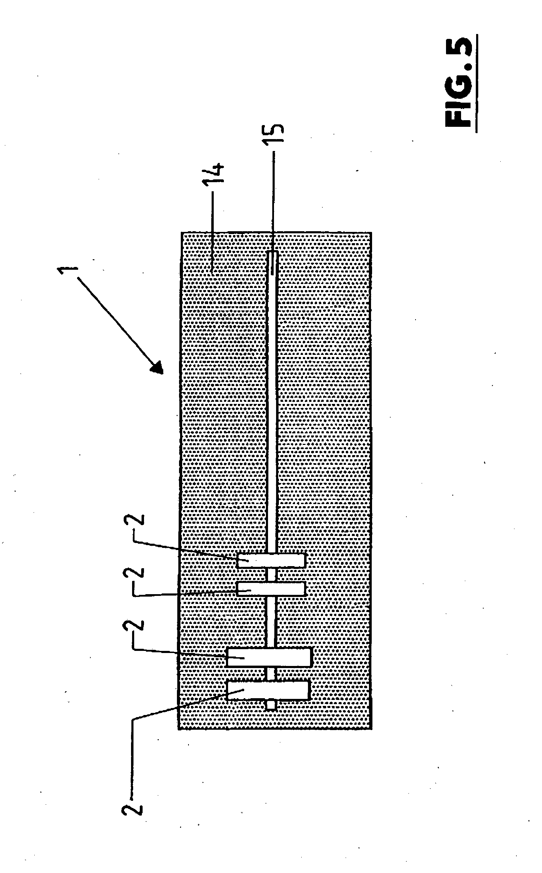

Das erfindungsgemäße Montagehilfssystem 1 umfasst bei der in den Figuren dargestellten Ausführungsform entsprechend der Figur 5 eine Vielzahl von Abstandslehren 2, die in ihrer generellen Formgebung im Wesentlichen identisch ausgeführt sind, und zwar jeweils mit einem mittleren, als U-Profil ausgebildeten Profilabschnitt 2.1 und mit zwei von diesem mittleren Profilabschnitt 2.1 in entgegen gesetzten Richtungen flügelartig wegstehenden plattenförmigen Profilabschnitten 2.2. Im Detail weist der mittlere Profilabschnitt 2.1 zwei parallel zueinander angeordnete und voneinander beabstandete Schenkel 3 und einen oberen, diese Schenkel miteinander verbindenden plattenförmigen Jochabschnitt 4 auf, der mit seinen Oberflächenseiten senkrecht zu den Ebenen der Außen- und Innenfläche der Schenkel 3 orientiert ist. Der Raum zwischen den Schenkeln 3 bildet eine Hutschienenaufnahme. Die plattenförmigen Profilabschnitte 2.2 schließen sich jeweils an die dem jochabschnitt entfernt liegenden Rand der Schenkel 3 an und sind mit ihren Oberflächenseiten parallel zu dem Jochabschnitt 4 orientiert.

Wie in der Figur 5 angedeutet, umfasst das Montagehilfssystem 1 Abstandslehren 2 unterschiedlicher Größe, d.h. Abstandslehren, bei denen insbesondere die Länge, mit der die Profilabschnitte 2.2 jeweils von dem mittleren Profilabschnitt 2.1 wegstehen, und damit auch der Abstand L , den die außen liegenden Seiten 2.2.1 der Profilabschnitte von einander aufweisen, unterschiedlich ist. Der mittlere Profilabschnitt 2.1 ist aber bei allen Abstandslehren 2 identisch ausgeführt.

Wie der Figur 5 weiterhin zu entnehmen ist, umfasst das Montagehilfssystem 1 jeweils mehrere identische Abstandslehren 2, vorzugsweise wenigstens zwei identische Abstandslehren 2 von jeder Größe.

Die Abstandslehren 2, die mit ihrem Profilabschnitt 2.1 und 2.2 bevorzugt einstückig hergestellt sind, bestehen beispielweise aus Kunststoff und/oder einem geeigneten metallischen Werkstoff und/oder aus Werkstoffkombinationen, beispielsweise Kunststoff-Metall-Kombinationen s. Speziell besteht auch die Möglichkeit, die Abstandslehren 2 aus einem die Profilabschnitte 2.1 und 2.2 aufweisenden Strangprofil durch Abtrennen von diesem Strangprofil herzustellen.

Die beiden Profilabschnitte 2.2 sind bei der dargestellten Ausführungsform jeweils mit einem Permanentmagneten 5 versehen, der beispielsweise in jeweils eine passende Ausnehmung des betreffenden Profilabschnittes 2.2 eingesetzt und dort in geeigneter Weise, beispielsweise durch Verkleben fixiert ist. Bei der Herstellung der Abstandslehren 2 als Formteile aus Kunststoff besteht auch die Möglichkeit, die Permanentmagneten 5 durch Umspritzen in den Profilabschnitten 2.2 vorzusehen und zu fixieren.

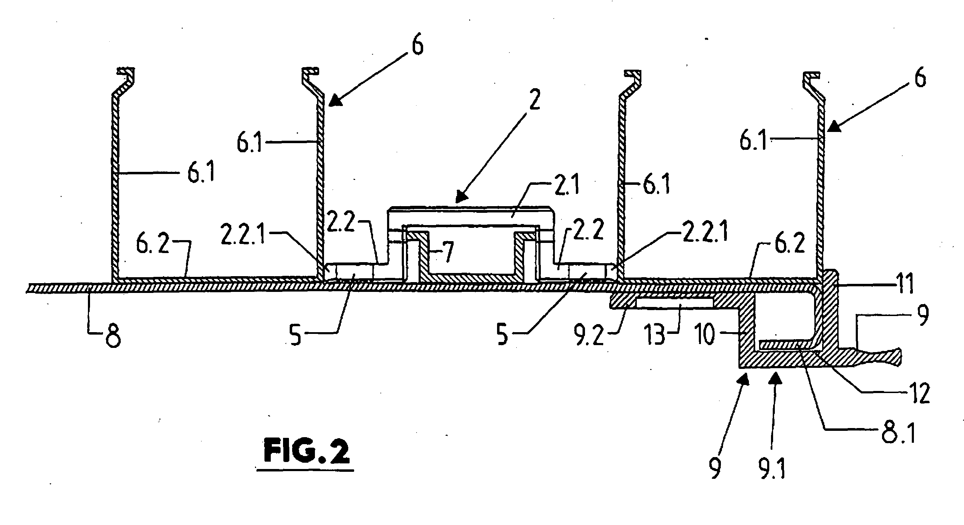

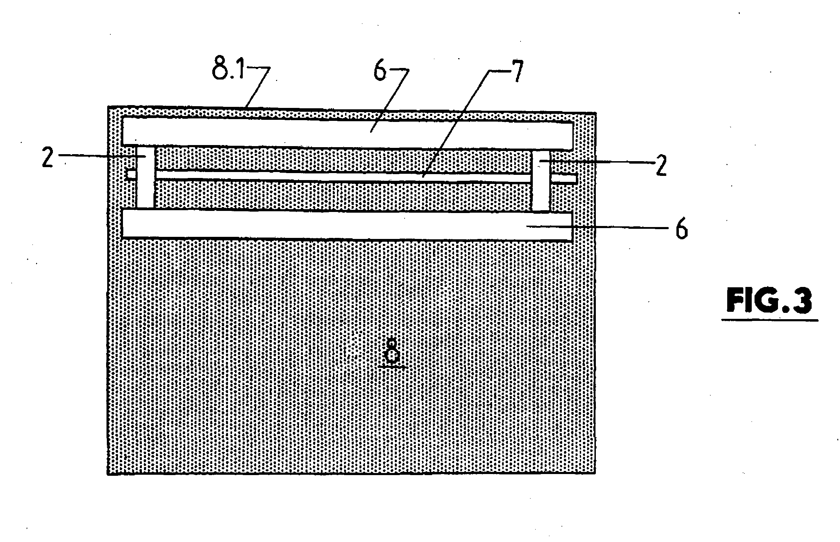

Die Figuren 2 und 3 zeigen die Verwendung des Montagehilfssystems bzw. der Abstandslehren 2 bei der Montage von Kabelkanälen 6 und Hutschienen 7 auf einer Montage- oder Basisplatte 8, die aus einem ferromagnetischen Material (z.B. Metall) besteht und beispielsweise die Basisplatte einer elektrischen Versorgungs- und/oder Schalt- und/oder Steuerungsanlage ist.

Die Kabelkanäle 6, von denen der einfacheren Darstellung wegen in den Figuren 2 und 3 jeweils nur zwei dargestellt sind weisen die dem Fachmann bekannte und üblicherweise bei elektrischen Verteilern und/oder Schaltschränken verwendete Ausbildung auf, d.h. jeder Kabelkanal 6 ist von einem U-Profil mit zwei Schenkelabschnitten 6.1 und einem diese verbindenden Jochabschnitt 6.2 gebildet, wobei die Befestigung des jeweiligen Kabelkanals 6 an der Basisplatte 8 an dem gegen die Oberseite dieser Basisplatte 8 anliegenden Jochabschnitt 6.2 erfolgt, beispielsweise unter Verwendung von Schrauben oder Nieten und derart, dass der jeweilige Kabelkanal 6 mit seiner Längserstreckung parallel zu einem Randbereich 8.2 der rechteckförmigen oder quadratischen Basisplatte 8 orientiert ist. Der Randbereich 8.1 ist bei der dargestellten Ausführungsform mehrfach abgewinkelt, kann aber auch anders ausgebildet sein. Die Schenkel 6.1 sind jeweils mit einer Vielzahl von Schlitzen ausgeführt, die von dem den Jochabschnitt 6.2 entfernt liegenden Rand der Schenkel 6.1 bis in die Nähe des Jochabschnittes 6.2 reichen, sodass nicht dargestellte elektrische Leiter oder Kabel von außen her in den zwischen den Schenkeln 6.1 gebildeten Innenraum des jeweiligen Kabelkanals 6 eingeführt werden können.

Die Montage der Kabel kanäle 6 erfolgt in einem vorgegebenen gegenseitigen Abstand derart, dass sämtliche Kabelkanäle 6 mit ihrer Längserstreckung parallel zueinander orientiert sind. Die Hutschienen 7, von denen in den Figuren 2 und 3 ebenfalls nur eine angedeutet ist und die in der dem Fachmann bekannten Weise zum Befestigen von elektrischen Bauteilen, beispielsweise von Sicherungen und/oder Schaltelementen, beispielsweise Relais, Zeituhren, Fehlstromschalter usw. dient, wird in der Mitte zwischen zwei Kabelkanälen 6 oder aber in einem vorgegebenen Abstand von einem Kabelkanal 6 an der Basisplatte montiert, und zwar derart, dass die Hutschiene 7 mit ihrer Längserstreckung parallel zu der Längserstreckung der Kabelkanäle 6 orientiert ist und damit auch parallel zu dem Randbereich 8.1 der Basisplatte 8.

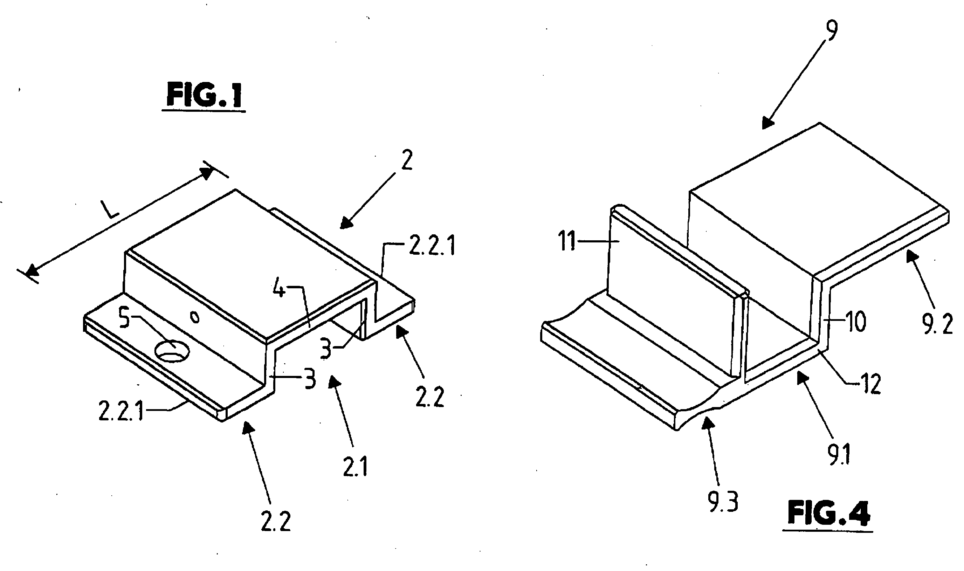

Bei der Montage der Kabelkanäle 6 und der Hutschienen 7 wird beispielsweise derart vorgegangen, dass in einem ersten Montageschritt zunächst ein Kabelkanal 6 exakt ausgerichtet an der Oberseite der Basisplatte 8 montiert wird, beispielsweise unmittelbar am Randbereich 8.1. Um diese Montage zu erleichtern, umfasst das Montagehilfssystem bei der in den Figuren dargestellten Ausführung auch wenigstens zwei Montagehilfsanschläge 9 auf, von denen einer im Detail in der Figur 4 gezeigt ist. jeder Montagehilfsanschlag ist wiederum einstückig aus einem metallischen Material und/oder Kunststoff gefertigt, und zwar im Wesentlichen mit drei Profilabschnitten, nämlich mit de mittleren U-förmigen Profilabschnitt 9.1 und den beiden weiteren, äußeren platten- oder leistenartigen Profilabschnitt 9.2 und 9.3. Dies stehen beidseitig von dem mittleren Profilabschnitt 9.1 wegstehen. Der mittlere Profilabschnitt 9.1 ist mit zwei zueinander parallelen und voneinander beabstandeten Schenkeln 10 und 11 und mit einem diese Schenkel verbindenden Jochabschnitt 12 ausgeführt. Der im Wesentlichen plattenförmige Profilabschnitt 9.2 schließt sich an den dem Jochabschnitt 12 entfernt liegenden Rand des Schenkels 10 an und erstreckt sich seitlich von dem mittleren Profilabschnitt 9.1 weg, und zwar derart, dass die Oberflächenseiten dieses Profilabschnittes parallel zu den Oberflächenseiten des Jochabschnittes 12 und senkrecht zu den Schenkeln 10 und 11 orientiert sind. Der Schenkel 11 besitzt in einer Achsrichtung senkrecht zum Jochabschnitt 12 eine etwas größere Breite als der Schenkel 10, d.h. der Schenkel 11 steht mit seinem oberen, dem Jochabschnitt 12 entfernt liegenden Randbereich über die Ebene der dem Jochabschnitt 12 abgewandten Oberseite des plattenförmigen Profilabschnittes 9.2 vor. Der Profilabschnitt 9.3 ist als leistenartiger Griff mit einer Griffmulde an der Oberseite und Unterseite ausgebildet und steht über die dem Schenkel 10 abgewandte Außenseite des Schenkels 11 weg. Im Profilabschnitt 9.2 ist ein Permanentmagnet 13 angeordnet, der beispielsweise in eine dortige Öffnung passend eingesetzt und fixiert ist. Bei Herstellung des Hilfsanschlags 9 als Formteil durch Spritzgießen kann der Permanentmagnet 13 auch durch Umspritzen im Profilabschnitt 9.2 vorgesehen und fixiert sein.

Zur Erleichterung der Montage des ersten, am Randbereich 8.1 zu montierenden Kabelkanals 6 werden zwei Montagehilfsanschläge 9 verwendet, die jeweils mit ihren Profilabschnitten 9.2 in Achsrichtung des Randbereichs 8.1 voneinander beabstandet an der Unterseite der Basisplatte 8 derart befestigt werden, dass der jeweilige Profilabschnitt 9.2 mit seiner dem Jochabschnitt 12 abgewandten Oberseite gegen die Unterseite der Basisplatte 8 anliegt und der Randbereich 8.1 der Basisplatte 8 in dem mittleren U-profilförmigen Profilabschnitt 8.1 aufgenommen ist. Der Schenkel 11, der mit seiner dem Schenkel 10 zugewandten Innenfläche gegen den äußeren Rand der Basisplatte 8 anliegt, steht mit seinem dem Jochabschnitt 12 entfernt liegenden oberen Randbereich über die Ebene der Oberseite der Basisplatte 8 vorsteht und bildet dadurch einen Anschlag für den zu montierenden Kabelkanal 6, wie dies insbesondere auch in der Figur 2 dargestellt ist.

Nach der Befestigung des ersten, dem Randbereich 8.1 benachbarten Kabelkanals 6 und nach der Abnahme der Montagehilfsanschläge 9 von der Basisplatte 8 werden für die dortige lagerichtige Montage des weiteren Kabelkanals 6 und der Hutschiene 7 aus der Vielzahl der Abstandslehren 2 zwei Abstandslehren ausgewählt, deren Länge L (Abstand zwischen den einander abgewandten Seiten 2.2.1) gleich dem gewünschten Abstand der Kabelkanäle 6 ist. Die beiden Abstandslehren 2 werden dann an der Oberseite der Basisplatte 8 im Abstand voneinander mit ihrem Permanentmagneten 5 fixiert, und zwar derart, dass die Länge L den Abstand zwischen den bereits montiertem Kabelkanal 6 und dem weiteren Kabelkanal 6 definiert, d.h. diese Abstandslehren 2 mit den Kabelkanal-Anlageflächen bildenden Seiten 2.2.1 gegen die Kabelkanäle und mit den dem Jochabschnitt 4 abgewandten Seiten der Profilabschnitte 2.2 gegen die Oberseite der Basisplatte 8 anliegen. Der U-förmige Profilabschnitt 2.1 ist derart ausgebildet, dass in ihm passend die zu montierende Hutschiene 7 aufgenommen ist, sodass diese nach dem Positionieren der wenigstens zwei Abstandslehren 2 ebenfalls die erforderliche Lage aufweist und in dieser Lage in geeigneter Weise, beispielsweise durch Schrauben oder Nieten an der Basisplatte 8 montiert werden kann. Nach der Montage der Hutschiene 7 und des weiteren Kabelkanals 6 werden die Abstandslehren 2 wieder von der Basisplatte 8 abgenommen.

Für eine Aufbewahrung und übersichtliche Anordnung der nicht gebrauchten Abstandslehren 2 ist weiterhin eine Ablage 14 vorgesehen, die beispielsweise als Platte quadratisch oder rechteckförmig ausgeführt ist und aus einem ferromagnetischen Material besteht. An einer Oberflächenseite der Ablage 14 sind mehrere voneinander beabstandete und parallel zueinander orientierte Halteschienen oder Halteleisten 15 vorgesehen, die ebenfalls ein für den Profilabschnitt 2.1 passenden Querschnitt aufweisen und auf die die nicht benötigten Abstandslehren 2 mit diesem Profilabschnitt 2.1 aufgesetzt oder aufgesteckt werden können, und zwar derart, dass die Profilabschnitte 2.2 gegen die Ablage 14 anliegen und die Abstandslehren 2 dort durch ihre Permanentmagnete 5 gehalten sind. Die Ablage 14 ist bevorzugt auch zum Ablegen der Hilfsanschläge 9 in ähnlicher Weise ausgeführt. Weiterhin ist die Ablage 14 beispielsweise eine an einer Wand oder an einer anderen Fläche befestigbare Platte oder aber Teil eines Werkzeugkoffers zur Aufbewahrung und/oder zum Transport der Abstandslehren 2 und Hilfsanschläge 9.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird. So wurde vorstehend davon ausgegangen, dass das Montagehilfssystem eine Vielzahl von Abstandslehren 2 mit unterschiedlicher Größe (Länge L) mit jeweils wenigstens zwei Abstandslehren 2 gleicher Größe aufweist. Bei einer sehr vereinfachten Ausbildung der Erfindung weist das Montagehilfssystem beispielsweise nur eine, bevorzugt lediglich zwei Abstandslehren gleicher Größe auf.

Weiterhin wurde vorstehend davon ausgegangen, dass die Abstandslehren 2 und die Hilfsanschläge 9 für ihre jeweils vorübergehende Fixierung an der Basisplatte 8 mit Permanentmagneten 5 bzw. 13 ausgestattet sind. Selbstverständlich besteht die Möglichkeit, anstelle dieser Permanentmagneten andere Mittel für eine vorübergehende Fixierung der Abstandslehren 2 bzw. der Hilfsanschläge 9 vorzusehen und/oder beispielsweise bei den Abstandslehren 2 auf derartige Mittel zum vorübergehenden Fixieren zu verzichten.

Weiterhin wurde vorstehend davon ausgegangen, dass bei den Abstandslehren 2 die Profilabschnitte 2.2 jeweils mit derselben Länge von dem mittleren Profilabschnitt 2.1 in entgegen gesetzter Richtung wegstehen, d.h. die Abstandslehren 2 beispielweise jeweils spiegelsymmetrisch zu einer in der Mitte zwischen den Schenkeln 3 verlaufenden und senkrecht zum jochabschnitt 4 orientierten Mittelebene ausgeführt sind. Selbstverständlich sind auch Ausführungen möglich, bei denen beispielsweise zur außermittigen Montage der jeweiligen Hutschiene 7 zwischen zwei Kabelkanälen 6 die Profilabschnitte 2.2 mit unterschiedlicher Länge von dem mittleren Profilabschnitt 2.1 wegstehen.

### Bezugszeichenliste

- 1: Montagehilfssystem
- 2: Abstandslehre
- 2.1,2.2: Profilabschnitt
- 2.2.1: Randbereich der Profilabschnitte 2.2
- 3: Schenkel
- 4: jochabschnitt
- 5: Permanentmagnet
- 6: Kabelkanal
- 6.1: Schenkel des Kabelkanals 6
- 6.2: Jochabschnitt des Kabelkanals 6
- 7: Hutschiene
- 8: Grund- oder Basisplatte
- 8.1: Randbereich
- 9: Montagehilfsanschlag
- 9.1 - 9.3: Profilabschnitt des Hilfsanschlags 9
- 10, 11: Schenkel
- 12: Jochabschnitt
- 13: Permanentmagnet
- 14: Tragplatte
- 15: Halteschiene oder Halteleiste
- L: Länge der Abstandslehre 2 bzw. Abstand zwischen den einander abgewandten außenliegenden Seiten oder Rändern 2.2.1

## Patentansprüche

1. Montagehilfssystem zur Montage von Kabelkanälen (6) und/oder Hutschienen (7) auf einer Montagefläche (8), **dadurch gekennzeichnet, dass** das Montagehilfssystem wenigstens eine Abstandslehre (2) in Form eines Profilkörpers aufweist, der mit wenigstens einer beidendig und an einer Unterseite des Profilkörpers (2.1, 2.2) offenen rinnenartigen Ausnehmung als Hutschienenaufnahme zur Aufnahme einer Hutschiene (7) ausgebildet ist und der zwei parallel zu einer Längserstreckung der Ausnehmung orientierte und voneinander beabstandeten Randbereiche (2.2.1) als Anlagen für jeweils einen Kabelkanal (6) bildet.

2. Montagehilfssystem nach Anspruch 1, **dadurch gekennzeichnet, dass** der Profilkörper zur Ausbildung der Hutschienenaufnahme in einem Profilabschnitt (2.1) als U-Profil ausgeführt ist.

3. Montagehilfssystem nach Anspruch 2, **dadurch gekennzeichnet, dass** die voneinander beabstandeten Anlagen (2.2.1) für die Kabelkanäle (6) von jeweils einem von dem ersten Profilabschnitt (2.1) flügelartig wegstehenden zweiten Profilabschnitt (2.2) gebildet sind.

4. Montagehilfssystem nach einem der vorhergehenden Ansprüche, **gekennzeichnet durch** Mittel zum vorübergehenden bzw. wieder lösbaren Fixieren der Abstandslehre (2) an der Montageplatte, wobei diese Mittel vorzugsweise von wenigstens einem Permanentmagneten (5) gebildet sind.

5. Montagehilfssystem nach einem der vorhergehenden Ansprüche, **dadurch gekennzeichnet, dass** das Montagehilfssystem wenigstens zwei identische Abstandslehren (2) aufweist.

6. Montagehilfssystem nach einem der vorhergehenden Ansprüche, **dadurch gekennzeichnet, dass** das Montagehilfssystem wenigstens zwei Abstandslehren (2) unterschiedlicher Größe bzw. mit unterschiedlichem Abstand zwischen den Anlagen (2.2.1) für die Kabelkanäle (6) aufweist.

7. Montagehilfssystem nach einem der vorhergehenden Ansprüche, **gekennzeichnet durch** wenigstens einen an der Montageplatte wieder lösbar befestigten Montagehilfsanschlag (9) zur ausgerichteten Montage eines Kabelkanals (6) im Bereich eines Randes (8.1) der Montagefläche oder einer Montageplatte (8), wobei der Hilfsanschlag (9) mit einem ersten Profilabschnitt (9.1) an der Montageplatte (8), vorzugsweise an einer Unterseite der Montageplatte (8) fixierbar ist und wenigstens einen weiteren Profilabschnitt (9.1) aufweist, der eine Anlagefläche für den Rand (8.1) der Montageplatte (8) sowie auch einen Montageanschlag für den Kabelkanal (6) bildet.

8. Montagehilfssystem nach Anspruch 7, **dadurch gekennzeichnet, dass** der Montagehilfsanschlag mit wenigstens einem Permanentmagneten (13) zum wieder lösbaren Fixieren an der Montageplatte (8) ausgebildet ist.

9. Montagehilfssystem nach Anspruch 7 oder 8, **dadurch gekennzeichnet, dass** der Montagehilfsanschlag (9) mit einer Ausnehmung, vorzugsweise mit einer von einem U-förmigen Profilabschnitt (9.1) gebildeten Ausnehmung zur Aufnahme des Randes oder eines Randbereichs (8.1) der Montageplatte (8) ausgebildet ist.

10. Montagehilfssystem nach einem der Ansprüche 7 - 9, **gekennzeichnet durch** wenigstens zwei Montagehilfsanschläge (9).

11. Montagehilfssystem nach einem der vorhergehenden Ansprüche, **dadurch gekennzeichnet, dass** die wenigstens eine Abstandslehre (2) und/oder der wenigstens eine Hilfsanschlag (9) aus einem metallischen Werkstoff und/oder aus Kunststoff gefertigt sind.

## Claims

1. A mounting assistance system for the mounting of cable conduits (6) and/or top hat rails on a mounting surface (8), **characterised in that** the mounting assistance system has at least one spacer gauge (2) in the form of a profiled body having at least one channel-type recess, open at both ends and on a lower face of the profiled body (2.1, 2.2), the profiled body being designed as a top hat rail receiving element for receiving a top hat rail (7) and providing two edge regions (2.2.1) as support for a cable conduit (6) in each case, the two edge regions being oriented parallel to a longitudinal direction of the recess and spaced apart from one another.

2. The mounting assistance system according to claim 1, **characterised in that** the profiled body is designed as a U-profile in a profile section (2.1) to build the top hat rail receiving element.

3. The mounting assistance system according to claim 2, **characterised in that** the supports (2.2.1) for the cable conduits (6) that are spaced apart from one another are formed in each case by a second profile section (2.2) protruding from the first profile section (2.1) in the form of a wing.

4. The mounting assistance system according to one of the preceding claims, **characterised by** means for the temporary or detachable fixing of the spacer gauge (2) on the mounting plate, wherein said means are preferably formed by at least one permanent magnet (5).

5. The mounting assistance system according to one of the preceding claims, **characterised in that** the mounting assistance system has at least two identical spacer gauges (2).

6. The mounting assistance system according to one of the preceding claims, **characterised in that** the mounting assistance system has at least two spacer gauges (2) of differing size, i.e. with differing spacings between the supports for the cable conduits (2.2.1).

7. The mounting assistance system according to one of the preceding claims, **characterised by** at least one mounting assistance arrester (9), detachably attached to the mounting plate for the aligned mounting of a cable conduit (6) in the region of an edge (8.1) of the mounting surface or mounting plate (8), wherein the assistance arrester (9) can be fixed with a first profile section (9.1) on the mounting plate (8), preferably on a lower face of the mounting plate (8), and has at least one further profile section (9.1), which forms a support surface for the edge (8.1) of the mounting plate (8) and also a mounting arrester for the cable conduit (6).

8. The mounting assistance system according to claim 7, **characterised in that**, the mounting assistance arrester is designed with at least one permanent magnet (13) for the detachable fixing on the mounting plate (8).

9. The mounting assistance system according to claim 7 or 8, **characterised in that**, the mounting assistance arrester (9) is designed with a recess, preferably with a recess formed by a U-shaped profile section (9.1), for receiving the edge or an edge region (8.1) of the mounting plate (8).

10. The mounting assistance system according to one of the claims 7 to 9, **characterised by** at least two mounting assistance arresters (9).

11. The mounting assistance system according to one of the preceding claims, **characterised in that**, the at least one spacer gauge (2) and/or the at least one assistance arrester (9) are produced from a metallic material and/or from plastic.

## Revendications

1. Système d'aide au montage pour le montage de conduites pour câbles (6) et/ou de profilés chapeau (7) sur une surface de montage (8), **caractérisé en ce que** le système d'aide au montage présente au moins un gabarit d'espacement (2) sous la forme d'un corps profilé, lequel est réalisé, avec au moins une cavité semblable à goulotte ouverte aux deux extrémités et sur un dessous du corps profilé (2.1, 2.2), en tant que cavité de profilé chapeau pour loger un profilé chapeau (7) et lequel forme deux zones de bord (2.2.1) orientées parallèlement à une étendue longitudinale de la cavité et espacées l'une de l'autre en tant que butées pour une conduite pour câbles (6) respective.

2. Système d'aide au montage selon la revendication 1, **caractérisé en ce que** le corps profilé est réalisé, pour la formation de la cavité de profilé chapeau dans un segment de profilé (2.1), en tant que profilé en U.

3. Système d'aide au montage selon la revendication 2, **caractérisé en ce que** les butées (2.2.1) espacées l'une de l'autre pour les conduites pour câbles (6) sont respectivement formées par un deuxième segment de profilé (2.2) dépassant du premier segment de profilé (2.1) à la manière d'une aile.

4. Système d'aide au montage selon l'une des revendications précédentes, **caractérisé par** des moyens pour la fixation provisoire, ou de nouveau détachable, du gabarit d'espacement (2) sur la plaque de montage, ces moyens étant de préférence formés par au moins un aimant permanent (5).

5. Système d'aide au montage selon l'une des revendications précédentes, **caractérisé en ce que** le système d'aide au montage présente au moins deux gabarits d'espacement (2) identiques.

6. Système d'aide au montage selon l'une des revendications précédentes, **caractérisé en ce que** le système d'aide au montage présente au moins deux gabarits d'espacement (2) de taille différente ou au moins avec un espacement différent entre les butées (2.2.1) pour les conduites pour câbles (6).

7. Système d'aide au montage selon l'une des revendications précédentes, **caractérisé par** au moins une butée d'aide au montage (9) fixée de manière de nouveau détachable à la plaque de montage pour le montage ajusté d'une conduite pour câbles (6) dans la zone d'un bord (8.1) de la surface de montage ou d'une plaque de montage (8), moyennant quoi la butée de montage (9) peut être fixée avec un premier segment de profilé (9.1) sur la plaque de montage (8), de préférence sur un dessous de la plaque de montage (8), et présente au moins un autre segment de profilé (9.1), lequel forme une surface de butée pour le bord (8.1) de la plaque de montage (8) ainsi qu'également une butée de montage pour la conduite pour câbles (6).

8. Système d'aide au montage selon la revendication 7, **caractérisé en ce que** la butée d'aide au montage est réalisée avec au moins un aimant permanent (13) pour la fixation de nouveau détachable sur la plaque de montage (8).

9. Système d'aide au montage selon les revendications 7 ou 8, **caractérisé en ce que** la butée d'aide au montage (9) est réalisée avec une cavité, de préférence avec une cavité formée par un segment de profilé (9.1) en forme de U, pour le logement du bord ou d'une zone de bord (8.1) de la plaque de montage (8).

10. Système d'aide au montage selon l'une des revendications 7-9, **caractérisé par** au moins deux butées d'aide au montage (9).

11. Système d'aide au montage selon l'une des revendications précédentes, **caractérisé en ce que** l'au moins un gabarit d'espacement (2) et/ou l'au moins une butée d'aide (9) sont fabriqués en un matériau métallique et/ou en une matière synthétique.
